# EUROPEAN PATENT SPECIFICATION

(11) **EP 0 846 399 B1**
(45) Date of publication and mention of the grant of the patent: **17.03.2004**
(21) Application number: 96928445.4
(22) Date of filing: 09.08.1996
(51) Int. Cl.: H04Q 3/00, H04Q 7/38, H04M 3/42

(54) **COMMUNICATION SYSTEM AND SERVICE CONTROLLER FOR CALL HANDLING**
KOMMUNIKATIONSSYSTEM UND DIENSTSTEUERUNG FÜR ANRUFBEARBEITUNG
SYSTEME DE COMMUNICATION ET GESTIONNAIRE DE SERVICES POUR LE TRAITEMENT D'APPELS

(30) Priority: 21.08.1995 GB 9517102
(43) Date of publication of application: 10.06.1998
(73) Proprietor: MOTOROLA LTD, Basingstoke, Hampshire RG21 7PL (GB)
(72) Inventor: CHAMBERS, David, Winchester, Hampshire SO22 4DL (GB); CRICHTON, Paul, Newbury, Berkshire RG20 9XY (GB); DODD, Adrian, Thatcham, Berkshire RG19 4GL (GB)
(74) Representative: Morgan, Marc
(86) International application number: PCT/EP1996/003538
(87) International publication number: WO 1997/007637

(56) References cited:
- EP-A- 0 654 930
- DE-A- 4 441 753
- GB-A- 2 198 011
- IEEE NETWORK, vol. 8, no. 2, March 1994 - April 1994, NEW YORK US, pages 6-16, XP000515075 LAUER: "IN architectures for implementing Universal Personal Telecommunications"
- ANNUAL REVIEW OF COMMUNICATIONS, vol. 48, 1994 - 1995, CHICAGO US, pages 557-569, XP000543205 PENKLER ET AL.: "Evolving open Intelligent Networks for global and broadband services"
- INTERNATIONAL SWITCHING SYMPOSIUM, vol. 2, 23 - 28 April 1995, BERLIN DE, pages 31-35, XP000495620 CRAVEN ET AL.: "Evolving subscriber data management in digital switches to provide Personal Communications Services"

## Description

### Background of the Invention

This invention relates, in general, to a communication system, and is particularly, but not exclusively, applicable to an intelligent network in which a multitude of communication services may be provided to a subscriber unit in response to a call trigger.

### Summary of the Prior Art

The evolution of present day communication systems, such as cellular communication systems and landline-based systems, has resulted in the realisation of intelligent networks. As will be appreciated, intelligent networks allow an interaction between a service switching point (SSP), responsible for the control and routing of a call, and a service control point (SCP) for the invocation of an "IN" service resident on the SCP. More particularly, the interaction occurs if "triggers" are invoked at the SSP, which triggers are generated by suitable break-points in a standard communication call model, e.g. when the call produces an off-hook signal or after the call has progressed to the number dialled stage. As such, each trigger may invoke a particular service that is used to establish a call, and that is pertinent to a particular point in time in the sequence of events of the communication call model.

Examples of IN architectures are given in "IN Architectures for Implementing Universal Personal Telecommunications" by Lauer, IEEE Network, Vol. 8, no. 2 March - April 1994. The article describes architectures used for providing universal personal telecommunications services to wireline users.

EP 0 654 930 A1 discloses a network-accessible intelligent telephone service wherein a telephone caller is provided with ready access to an array of calling features and services regardless of his or her location. This is achieved by addressing a central database through regional nodes.

Presently, when a trigger is invoked, there is only one SCP address to contact, which single SCP address provides a solitary service, such as voice, data or video. However, a management problem arises when a subscriber unit wishes to utilise multiple IN service and these multiple services are invoked by the same single trigger in the SSP. Additionally, the rigid architecture of present intelligent networks precludes a third party from providing an IN service from a proprietary SCP, which further limits a subscriber unit's choice (from all potentially available services) and restricts a subscriber unit from obtaining a comprehensive selection of services.

Accordingly, a need exists for an improved intelligent network architecture that can integrate and manage proprietary services provided by numerous SCPs.

### Summary of the Invention

According to a first aspect of the present invention there is provided communication system for providing at least one subscriber affiliated service to a subscriber unit in response to a trigger generated by the subscriber unit during a call, the communication system comprising: a service control point (SCP) router, responsive to the trigger, having a subscriber database containing a list of subscriber units and associated services affiliated with each subscriber unit in the list, the SCP router further comprising means for identifying an address of the at least one subscriber affiliated service in the system and means for invoking the at least one subscriber affiliated service for use by the subscriber unit through the routing of the subscriber unit to the address so identified; and a plurality of secondary SCPs each comprising at least one service; said SCP router being adapted to route a request for a service to any of said secondary SCPs; wherein the plurality of secondary SCPs each comprise control logic and wherein at least one secondary SCP of the plurality of secondary SCPs is coupled to at least one other secondary SCP of the plurality of secondary SCPs; said at least one secondary SCP being adapted to intelligently re-direct a request for a service to said at least one other secondary SCP.

An exemplary embodiment of the present invention will now be described with reference to the accompanying drawing.

### Brief Description of the Drawings

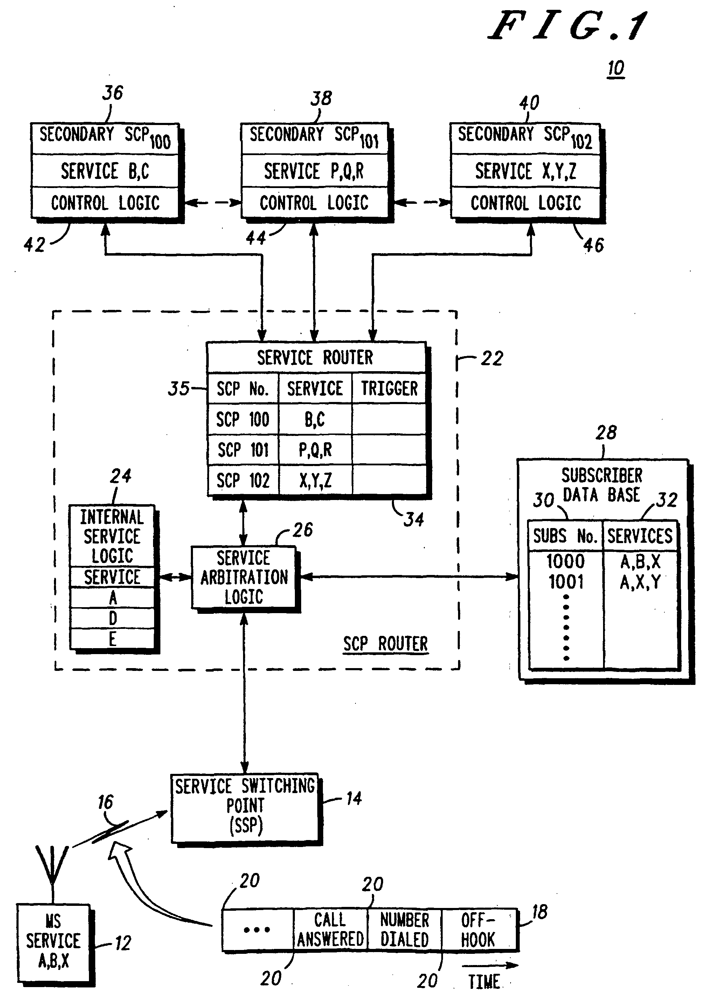

FIG. 1 is a block diagram of an intelligent network that provides multiple services to a subscriber unit in response to a call trigger, in accordance with a preferred embodiment of the present invention.

### Detailed Description of a Preferred Embodiment

Referring to FIG. 1, there is shown, in accordance with a preferred embodiment of the present invention, a block diagram of an intelligent network 10 that provides multiple services to a subscriber unit in response to a call trigger.

A subscriber unit (which may be a mobile unit) 12 communicates with a service switching point (SSP) 14 via a communication link 16, such as a radio channel or landline. The subscriber unit 12 can command services A, B and X from a range of services provided by the network 10. As will be appreciated, in a mobile communication system, such as the Groupe Speciale Mobile (GSM) pan-European cellular communication system, a mobile switching centre (MSC) performs the tasks of a SSP, and is arranged to intelligently direct mobile terminated calls, for example, to a relevant destination or service. A typical model of a call 18, communicated over the communication link 16, is illustrated in the figure. More particularly, the model of a call 18 comprises a plurality of discrete sections, such as "Off-Hook", "Number Dialled" and "Call Answered". Moreover, the boundaries 20 between these discrete sections provide "trigger" opportunities for the intelligent network, as will be understood by a skilled addressee. In this respect and unlike prior art systems, services A, B and X of subscriber unit 12 may potentially all be triggered from any single boundary event 20.

The SCP 14 is coupled to a (primary) SCP router 22 that is arranged to route particular services to the subscriber unit 12 in response to a triggered request (provided by a suitable boundary 20 in the call). The SCP router 22 comprises internal service logic 24 that provides the necessary logic for services A, D and E, and service arbitration logic (i.e. a processor) 26 coupled to the internal service logic 24 for selecting services and controlling the operation of the SCP router 22. The service arbitration logic 26 is further coupled to a subscriber database 28 that contains listings of subscriber addresses 30 and types of services 32 affiliated thereto. For example, subscriber address "1000" (which corresponds to subscriber unit 12) has services A, B and X associated therewith. As such, in response to a trigger from an identified subscriber unit, the SCP router 22 is able to invoke the requisite services based on the information in the subscriber database 28. Furthermore, although the subscriber database is shown as a discrete database located outside the physical confines of the SCP router 22, it will be appreciated that the subscriber database may equally well be implemented within the SCP router 22. The service arbitration logic 26 is further responsive to a service router database 34, which database identifies particular services provided by secondary SCPs, for example, (typically through their addresses within the system). More particularly, in the service router.database 34 of FIG. 1, an address field 35 is used to identify the locations (memory addresses or physical addresses) of either the internal service logic or the proprietary services that reside outside the SCP router 22. In this way, the service router database 34 is integral in providing/routing the service to the subscriber unit through the identification of the location of the service. Optionally, the service router database 34 may associate particular services with particular triggers, so a particular service will only be invoked by a particular trigger. Although information relating to the trigger is currently shown as residing in the service router database 34, this is not to say that this information need reside at this specific location. Indeed, the information need only be associated with the services affiliated with the subscriber unit.

SCP router 22 is also coupled to secondary SCPs 36-40, which respectively provide services (B and C), (P, Q and R) and (X, Y and Z). Therefore, where necessary, the service arbitration logic 26 is able to route a request for a service (generated by a trigger) to any one of a plurality of secondary SCPs. Therefore, the SSP 14 is able to access a service resident on a secondary SCP, even though the SSP always initially accesses the SCP router 22. Optionally, each secondary SCP may contain control logic 42-46, and may be coupled to at least one other secondary SCP. Therefore, in the event that the SCP router 22 determines that multiple services are to be provided from a single trigger, and that these services are provided on different secondary SCPs 36-40, the control logic 42-46 in the secondary SCPs may be utilised to intelligently re-direct a request for a service between secondary SCPs, rather than via the SCP router 22. As such, processing overhead in the system is reduced.

For the sake of simplicity, only three additional services providers are illustrated, although a network may contain fewer or substantially more. Additionally, these secondary SCPs may be proprietary, third party-owned systems, and may each contain one or more services.

In operation, a network operator is responsible for overseeing the operation of the (primary) SCP, i.e. the SCP router 22, that manages the multiplicity of services without the need for additional signalling with the SSP 14. The SCP contains service arbitration functionality that can determine, select and invoke more than one service in response to a trigger (through the identification of the location/address of the service). With respect to selection, two principal methods are available, namely Precedence Arbitration and Subset Arbitration. In this respect, Precedence Arbitration requires services to be logically tested for invocation on a predetermined priority basis. Therefore, if a particular service is not invoked because of prevailing trigger conditions, that particular service possibility is discarded and the next service tested for applicability. In Subset Arbitration, the services are designed such that one service can only be invoked after a more fundamental (precursor) service has been previously invoked and that certain conditions (when required) have subsequently arisen. In either case, the service router database 34 provides a mechanism for directing the subscriber unit 12 to the relevant service logic (whether it is stored within the SCP router 22 or in one of the plurality of secondary SCPs).

The present invention therefore advantageously provides a flexible intelligent network having service functions distributed and controlled between the SCP router and at least one secondary SCP responsive thereto. Therefore, the system of the present invention allows optimised system construction through the ability to modify systems to include proprietary third-party services, thereby providing more service opportunities per subscriber.

Therefore, the SCP router 22 acts as a routing node and determines either the dominant service from a plurality of requested services or the order in which services are provided of service requested (both scenarios being triggered from a single boundary 20). As such, the SCP router 22 provides an arbitration service over triggers and accordingly routes a call to a proprietary service provider or to the necessary, internal service logic 24 (subject to the arbitration process). Thus, the SCP router is able to manage multiple services and service logic locations without complicating the underlying trigger mechanisms.

## Claims

1. A communication system (10) for providing at least one subscriber affiliated service to a subscriber unit (12) in response to a trigger (20) generated by the subscriber unit (12) during a call, the communication system (10) **characterized by** comprising:
a service control point (SCP) router (22), responsive to the trigger (20), having a subscriber database (28) containing a list of subscriber units and associated services affiliated with each subscriber unit in the list, the SCP router (22) further comprising means for identifying an address of the at least one subscriber affiliated service in the system and means for invoking the at least one subscriber affiliated service for use by the subscriber unit through the routing of the subscriber unit (12) to the address so identified; and
a plurality of secondary SCPs (36, 38, 40) each comprising at least one service;
said SCP router (22) being adapted to route a request for a service to any of said secondary SCPs (36, 38, 40);
wherein the plurality of secondary SCPs (36, 38, 40) each comprise control logic and wherein at least one secondary SCP of the plurality of secondary SCPs (36, 38, 40) is coupled to at least one other secondary SCP of the plurality of secondary SCPs (36, 38, 40);
said at least one secondary SCP being adapted to intelligently re-direct a request for a service to said at least one other secondary SCP.

2. The communication system (10) of claim 1, wherein the trigger (20) is a boundary between sections of a call model.

3. The communication system (10) of any preceding claim, wherein the SCP router (22) comprises at least one service.

4. The communication system (10) of any preceding claim, wherein the means for invoking the at least one subscriber affiliated service invokes a second service associated with the subscriber unit (12) only after invoking a first service associated with the subscriber unit (12).

## Patentansprüche

1. Kommunikationssystem (10) zum Versorgen einer Teilnehmereinheit (12) mit wenigstens einem teilnehmerangegliederten Dienst als Antwort auf einen während einer Anrufverbindung von der Teilnehmereinheit (12) erzeugten Trigger (20), wobei das Kommunikationssystem (10) **dadurch gekennzeichnet ist, dass** es umfasst:
einen Dienststeuerpunkt-Router ("SCP-Router") (22), der auf den Trigger (20) anspricht, mit einer Teilnehmerdatenbank (28), welche eine Liste von Teilnehmereinheiten und zugeordneten Diensten, die jeder Teilnehmereinheit in der Liste angegliedert sind, enthält, wobei der SCP-Router (22) weiter Mittel zum Identifizieren einer Adresse des wenigstens einen teilnehmerangegliederten Dienstes in dem System sowie Mittel zum Aufrufen des wenigstens einen teilnehmerangegliederten Dienstes zur Verwendung durch die Teilnehmereinheit mittels des Routings der Teilnehmereinheit (12) an die so identifizierte Adresse umfasst; und
eine Mehrzahl sekundärer SCPs (36, 38, 40), von denen jede wenigstens einen Dienst umfasst, wobei der SCP-Router (22) eingerichtet ist, um eine Dienstanforderung an irgendeinen der sekundären SCPs (36, 38, 40) zu routen;
wobei die Mehrzahl sekundärer SCPs (36, 38, 40) jeweils eine Steuerlogik umfassen und wobei wenigstens ein sekundärer SCP der Mehrzahl sekundärer SCPs (36, 38, 40) mit wenigstens einem weiteren sekundären SCP der Mehrzahl sekundärer SCPs (36, 38, 40) verbunden ist;
wobei der wenigstens eine sekundäre SCP eingerichtet ist, um eine Dienstanforderung auf intelligente Weise an den wenigstens einen anderen sekundären SCP umzuleiten.

2. Kommunikationssystem (10) nach Anspruch 1, wobei der Trigger (20) eine Grenze zwischen Sektionen eines Anrufverbindungsmodells ist.

3. Kommunikationssystem (10) nach einem der vorangehenden Ansprüche, wobei der SCP-Router (22) wenigstens einen Dienst umfasst.

4. Kommunikationssystem (10) nach einem der vorangehenden Ansprüche, wobei die Mittel zum Aufrufen des wenigstens einen teilnehmerangegliederten Dienstes einen zweiten, der Teilnehmereinheit (12) zugeordneten Dienst erst aufrufen, nachdem ein erster der Teilnehmereinheit (12) zugeordneter Dienst aufgerufen wurde.

## Revendications

1. Système de communication (10) pour fournir au moins un service associé à un abonné, à une unité d'abonné (12) en réponse à un élément déclencheur (20) produit par l'unité d'abonné (12) lors d'un appel, le système de communication (10) étant **caractérisé en ce qu'**il comprend :
un routeur (22) de point de commande de service (SCP), qui est apte à répondre à l'élément déclencheur (20) et comporte une base de données d'abonnés (28) contenant une liste d'unités d'abonnés et des services associés affiliés à chaque unité d'abonné dans la liste, le routeur (22) de point SCP (22) comprenant en outre des moyens pour identifier une adresse du service affilié à au moins un abonné dans le système, et des moyens pour appeler le service affilié à au moins un abonné pour son utilisation par une utilisation par une unité d'abonné au moyen du guidage de l'unité d'abonné (12) jusqu'à l'adresse ainsi identifiée; et
une pluralité de points SCP secondaires (36,38, 40) comprenant chacun au moins un service;
ledit routeur SCP (22) étant adapté pour acheminer une demande pour un service jusqu'à l'un quelconque desdits points SCP secondaires (36,38,40);
dans lequel la pluralité de points SCP secondaires (36,38,40) comprennent chacun une logique de commande, et dans lequel au moins un point SCP secondaire de la pluralité de points SCP secondaires (36,38,40) est couplé à au moins un autre point SCP secondaire de la pluralité de points SCP secondaires (36,38,40);
ledit au moins un point SCP secondaire étant adapté pour rediriger d'une manière intelligente une demande d'un service vers ledit au moins un autre point SCP secondaire.

2. Système de communication (10) selon la revendication 1, dans lequel l'élément déclencheur (20) est une limite entre des sections d'un modèle d'appel.

3. Système de communication (10) selon l'une quelconque des revendications précédentes, dans lequel le routeur SCP (22) comprend au moins un service.

4. Système de communication (10) selon l'une quelconque des revendications précédentes, dans lequel les moyens pour appeler le service affilié à au moins un abonné appelle un second service associé à l'unité d'abonné (12) uniquement après l'appel d'un premier service associé à l'unité d'abonné (12).
